# EUROPÄISCHE PATENTSCHRIFT

(11) **EP 0 557 791 B1**
(45) Veröffentlichungstag und Bekanntmachung des Hinweises auf die Patenterteilung: **31.05.1995**
(21) Anmeldenummer: 93102022.6
(22) Anmeldetag: 10.02.1993
(51) Int. Cl.: B01D 33/03, B01D 35/20

(54) **Filtervorrichtung, insbesondere für Dispersionsfarben**
Filter device, especially for dispersion paints
Dispositif filtrant, en particulier peintures en dispersion

(30) Priorität: 15.02.1992 DE 4204613
(43) Veröffentlichungstag der Anmeldung: 01.09.1993
(73) Patentinhaber: BRAAS GMBH, 61440 Oberursel (DE)
(72) Erfinder: Kreis, Günter, W-6117 Schaafheim-Schlierbach (DE); Stephan, Heinrich, Dr.-Ing., W-6090 Rüsselsheim (DE); Sattler, Ernst, W-6053 Obertshausen (DE)

(56) Entgegenhaltungen:
- DE-A- 1 461 427
- DE-A- 2 449 817
- US-A- 4 028 247

## Beschreibung

Die Erfindung betrifft eine Filtervorrichtung, insbesondere für Dispersionsfarben, aufweisend einen im wesentlichen topfförmigen Behälter, dessen Mittelachse vertikal angeordnet ist, einen in den freien Flüssigkeitsspiegel des Filtergutes hineinragenden Siebkörper mit seitlich angeordneten Filterflächen, der im Innenraum des Behälters um seine vertikal angeordnete Längsachse in einem Winkel von weniger als 360° reversierend schwenkbar ist, einen in den Raum zwischen Innenseite der Behälterwand und Außenseite des Siebkörpers mündenden Zulauf für Filtergut und einen von oben her in den Innenraum des Siebkörpers eingeführten Filtratablauf, der unterhalb des Flüssigkeitsspiegels des Filtrates mündet,

Eine derartige Filtervorrichtung ist aus der US-A-4,028,247 als Filtersystem zur Aufbereitung des Kühlmittels einer Werkzeugmaschine bekannt. Der Siebkörper ist in einer Buchse befestigt, die um den Stutzen der Kühlmittelversorgungsleitung drehbar gelagert ist. Der Stutzen der Kühlmittelversorgungsleitung ragt vertikal durch den freien Flüssigkeitsspiegel in das Kühlmittelreservoir hinein. Die Kühlflüssigkeit durchströmt den Siebkörper von außen nach innen und wird durch den mittig im Siebkörper befindlichen Stutzen der Kühlmittelversorgungsleitung aus dem Kühlmittelreservoir entnommen. Durch eine reversierende Drehbewegung des Siebkörpers sollen Metallspäne und Verunreinigungen, die sich an der Außenseite des Siebkörpers anlagern, entfernt werden. Im oberen Bereich der den Siebkörper tragenden Buchse ist ein Mitnehmer mit Führungsrad angeordnet, der durch eine kontinuierlich rotierende Nockenscheibe in eine reversierende Drehbewegung versetzt wird und diese auf den Siebkörper überträgt. Das Führungsrad des Mitnehmers wird durch die Federkraft einer Rückholfeder an die Nockenscheibe angedrückt. Die Welle der Nockensscheibe ist drehbar in einem, an der Kühlmittelversorgungsleitung befestigten, Gehäuse gelagert. Die Nockenscheibe weist die Form eines gleichseitigen Dreiecks mit gerundeten Ecken auf, so daß pro Umdrehungen drei Schwingbewegungen erfolgen. Die reversierende Drehbewegung des Siebkörpers stellt daher in ihrem Weg-, Geschwindigkeits- und Beschleunigungsverhalten eine sinusförmige Schwingung dar, deren Beschleunigung beim Erreichen eines Umkehrpunktes allmählich abnimmt, im Umkehrpunkt für einen minimalen Zeitpunkt den Wert Null annimmt und dann unter geändertem Richtungsvorzeichen wieder allmählich zunimmt. Für die Filtration von Stoffen mit sehr großen Dichteunterschieden, wie z. B. Metallspänen und Kühlflüssigkeit, sind die durch die oben beschriebene Mechanik erzeugten Trägheitskräfte gerade ausreichend.

Aus der DE-A-14 61 427 ist ein selbstreinigender Druck- bzw. Vakuumfilter bekannt, dem in einem druckfesten Behälter die zu filtrierende trübe Flüssigkeit durch einen Zulauf zugeführt wird. Die trübe Flüssigkeit passiert eine im unteren Bereich des Behälters befindliche horizontale Filterplatte, die aus einem unteren Teller, einer das Filtermedium tragenden Stützkonstruktion und dem Filtermedium besteht. Die trübenden Partikel werden während der Passage des Filtermediums vom Filtermedium aufgenommen und das Filtrat verläßt den Innenraum der Filterplatte über eine flexible Verbindungsleitung und ein Absperrorgan. Zur Entfernung des während des Betriebes entstehende Filterkuchens wird die Filterplatte in eine vorwärts- und rückwärtsdrehende Kreisbewegung versetzt. Der durch Zentrifugalkraft abgeschleuderte Filterkuchen gelangt durch einen Ringspalt zwischen der Filterplatte und der Behälterwandung in den unteren Bereich des Behälters, aus dem er über ein Ablaßventil aus der Apparatur entfernt werden kann.

Aufgabe der vorliegenden Erfindung ist es, eine Filtervorrichtung zum kontinuierlichen Entfernen von Verunreinigungen aus Flüssigkeiten durch eine Kombination von großen Trägheitskräften und starken Verwirbelungen in den den Siebkörper umgebenden Flüssigkeitsschichten ohne den Siebkörper berührendes mechanisches Reinigungssystem zu schaffen.

Erfindungsgemäß wird diese Aufgabe dadurch gelöst, daß der Behälter mit einem Deckel druckdicht verschlossen ist, daß der Siebkörper an einer im Zentrum des Deckels schwenkbar gelagerten Welle befestigt ist, daß zur Begrenzung der Schwenkbewegung an der Welle ein Anschlagelement und am Deckel ein Gegenanschlagelement vorgesehen ist, daß der Filtratablauf fest mit dem Behälter verbunden und parallel zur Längsachse des Behälters in den Behälter geführt ist, und daß der Behälter in seinem unteren Bereich einen Ablaß für Filterrückstände aufweist.

Bei der erfindungsgemäßen Filtervorrichtung wird der Siebkörper etwa 60 mal pro Minute hin und her geschwenkt. Infolge der tangentialen Bewegung der Außenfläche des Siebkörpers werden am Sieb abgesetzte Verunreinigungen gelockert und können zum Boden des Behälters herabsinken. Die Umfangsgeschwindigkeit des Siebkörpers soll etwa 0,2 - 0,4 m·s⁻¹ betragen. Es wird empfohlen, den Siebkörper um einen Winkel im Bereich von 45° bis 120°, vorzugsweise von 80° zu schwenken. Aufgrund dieser ständigen Selbstreinigung des Siebkörpers erfolgt der Durchtritt des Filtrates durch den Siebkörper nahezu drucklos, so daß die Differenz des Flüssigkeitsspiegels außerhalb des Siebkörpers gegenüber dem Flüssigkeitsspiegel des Filtrates sehr gering ist.

Die Lagerung der den Siebkörper tragenden Welle kann im Deckel beispielsweise durch zwei voneinander beabstandete Kugellager erfolgen. Als reversierende Antriebsvorrichtung kann ein pneumatischer, elektrischer oder hydraulischer Antrieb vorgesehen werden, der entweder direkt oder unter Zwischenschaltung von Übertragungselementen, wie Kettenantrieb oder Zahnrädern mit der Welle verbunden ist.

Die intensive Entfernung des Filterrückstands von der Sieboberfläche wird dadurch erreicht, daß zur Begrenzung der Schwenkbewegung an der Welle ein Anschlagelement und am Deckel des Behälters ein Gegenanschlagelement vorgesehen ist. Vorteilhafterweise sind die gegeneinander anschlagenden Flächen mit einem elastischen Material belegt, welches als Stoßdämpfer mit einem Dämpfungswinkel von 2° bis 5° Drehwinkel wirkt.

Da der Filtratablauf feststehend mit dem Behälter verbunden ist und von oben her in den Innenraum des Siebkörpers eingeführt ist, ist ein zumindest dem Winkel der Schwenkbewegung entsprechender Sektor auf der Oberseite des Filterkörpers offen, so daß bei Verstopfung des Siebkörpers ungereinigtes Filtergut in den Innenraum des Siebkörpers eintreten könnte. Um dies zu vermeiden, ist am Behälter unterhalb der Oberkante des Siebkörpers ein Füllstandsensor vorgesehen. Vorzugsweise wird als Füllstandsensor ein kapazitiver Näherungsschalter verwendet, der auf der Außenseite des Behälters hinter einem Fenster aus Kunststoff angebracht ist.

Eine leichte Reinigung der Filtervorrichtung, insbesondere bei Wechsel der Farbe ist möglich, wenn der Behälter und / oder der Deckel in Richtung der Mittelachse verschiebbar sind, und wenn der Deckel am Behälter mit Spannverschlußelementen befestigbar ist.

Die Zufuhr von Filterrückstand zum Ablaß im Boden des Behälters wird erleichtert, wenn der Behälter und der Siebkörper im Bodenbereich kegelförmig mit nach unten weisender Spitze ausgeführt sind. Der Kegelwinkel sollte etwa 90° betragen. Das Absinken von Filterrückstand wird erleichtert, wenn der Siebkörper im Bereich seiner seitlichen Wandung konisch mit nach oben hin zunehmendem Durchmesser ausgeführt ist.

In der Zeichnung ist ein bevorzugtes Ausführungsbeispiel der Erfindung dargestellt, das im folgenden näher erläutert wird.

Es zeigt
- Fig. 1: eine erfindungsgemäße Filtervorrichtung in der Seitenansicht,
- Fig. 2: die Filtervorrichtung aus Fig. 1 in der Draufsicht,
- Fig. 3: die Filtervorrichtung aus Fig. 1 im Längsschnitt entlang der Linie III-III,
- Fig. 4: den Siebkörper der Filtervorrichtung gemäß Fig. 3 im Längsschnitt und
- Fig. 5: den Siebkörper in der Draufsicht.

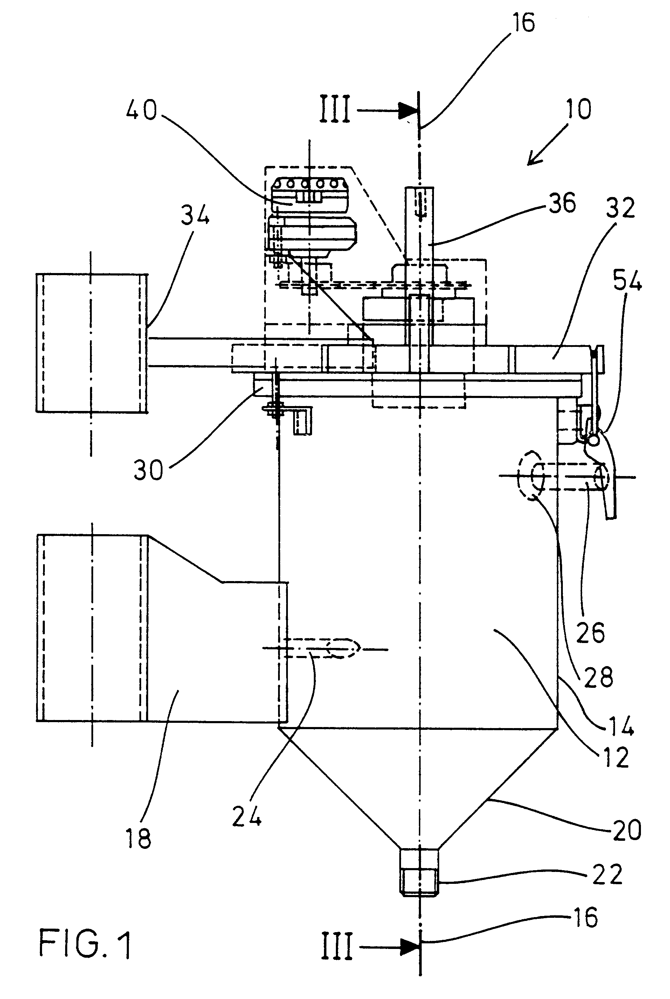

Fig. 1 zeigt eine erfindungsgemäße Filtervorrichtung 10 in der Seitenansicht. Ein Behälter 12 mit 375 mm hoher zylinderförmiger Seitenwand 14 mit einem Durchmesser von 300 mm ist mit vertikal verlaufender Mittelachse 16 in einem hier nicht dargestellten Gerüst aus Vierkantrohren mittels einer Behälterhalterung 18 befestigt. Der Bodenbereich 20 des Behälters 12 ist kegelförmig mit einem Kegelwinkel von 90° mit nach unten weisender Spitze ausgeführt und im Bereich seiner Spitze mit einem aus einem 1,25"-Rohr bestehenden Ablaß 22 für Filterrückstand versehen. Im unteren Bereich der Seitenwand 14 ist in 85 mm Höhe von der Unterkante der Seitenwand 14 ein tangential einmündender aus einem 0,5"-Rohr bestehender Zulauf 24 für Filtergut vorgesehen. Mit den genannten Abmessungen ist die Filtervorrichtung 10 für einen Durchsatz von 9 l·min⁻¹ geeignet, die Strömungsgeschwindigkeit im Zulauf 24 liegt bei 0,75 m·s⁻¹. Im oberen Bereich der Seitenwand 14 ist in 270 mm Abstand von der Unterkante der Seitenwand 14 ein auf kapazitive Änderungen ansprechender Füllstandsensor 26 vorgesehen, welcher direkt an einem Kunststoffenster 28 aus Niederdruck-Polyäthylen in der Seitenwand 14 angeordnet ist.

Am oberen Ende der Seitenwand 14 des Behälters 12 ist ein Ringflansch 30 vorgesehen, auf dem ein Deckel 32 aufgelegt ist. Der Behälter 12 besteht aus mit Teflon beschichtetem V2A-Stahl und ist für einen Überdruck von 3 bar ausgelegt.

Der Deckel 32 ist mittels einer Deckelhalterung 34 in Richtung der Mittelachse 16 in demselben Gerüst wie der Behälter 12 geführt. Der Deckel 32 ist von einer in diesem gelagerten 200 mm langen Welle 36 durchsetzt, welche über einen Kettenantrieb 38 mit einer pneumatisch betriebenen Antriebsvorrichtung 40 verbunden ist.

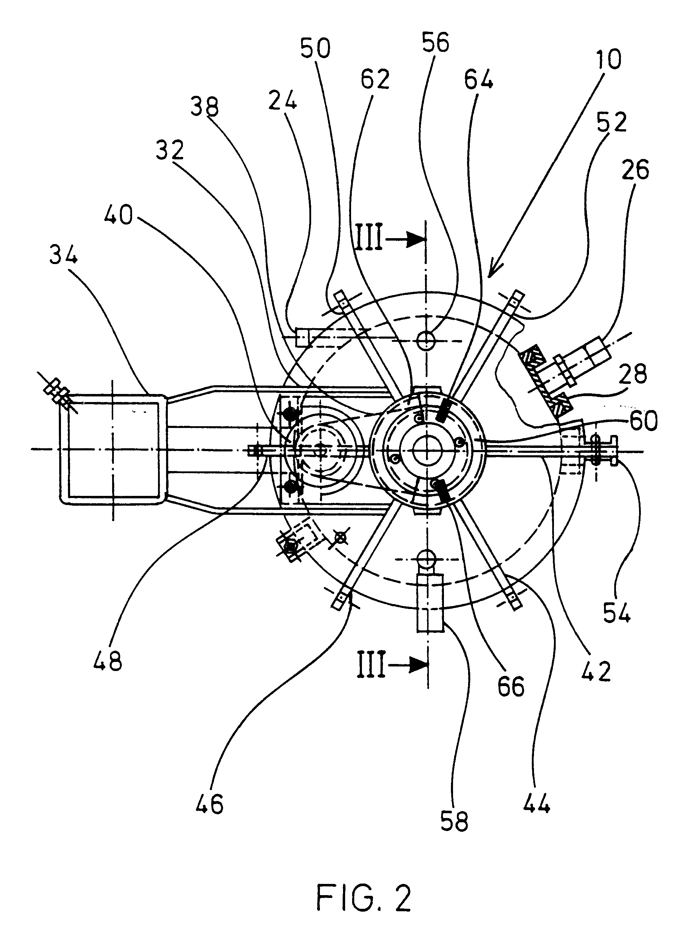

Fig. 2 zeigt die Filtervorrichtung in der Draufsicht, insbesondere die Oberseite des Deckels 32. Auf der Oberseite des Deckels 32 mit einem Durchmesser von 350 mm sind in radialer Richtung verlaufend insgesamt sechs Aussteifungen 42, 44, 46, 48, 50, 52, vorgesehen, an deren Enden jeweils ein Spannverschlußelement 54 vorgesehen ist. Der Übersichtlichkeit wegen ist nur ein einziges Spannverschlußelement 54 in der Zeichnung dargestellt. Zwischen den Aussteifungen 50 und 52 ist parallel zur Mittelachse 16 ein aus einem 0,5"-Rohr bestehender Filtratablauf 56 angeordnet. Der Filtratablauf 56 ist auf der Unterseite des Deckels 32 zur Mittelachse 16 hin abgekröpft und endet im Abstand von 260 mm vom Deckel 32. Diametral gegenüber dem Filtratablauf 56 ist ein Manometer 58 angeordnet. Mit der Welle 36 drehfest verbunden ist ein kreisringsektorförmiges Anschlagelement 60, welches auf ein mit dem Deckel 32 verbundenes ebenfalls kreisringsektorförmiges Gegenanschlagelement 62 einwirken kann. An den in radialer Richtung verlaufenden Stirnflächen des Anschlagelementes 60 sind elastische Puffer 64, 66 angeordnet, welche die Schwenkbewegung abbremsen und die pneumatische Antriebsvorrichtung 40 zur Richtungsumkehr veranlassen.

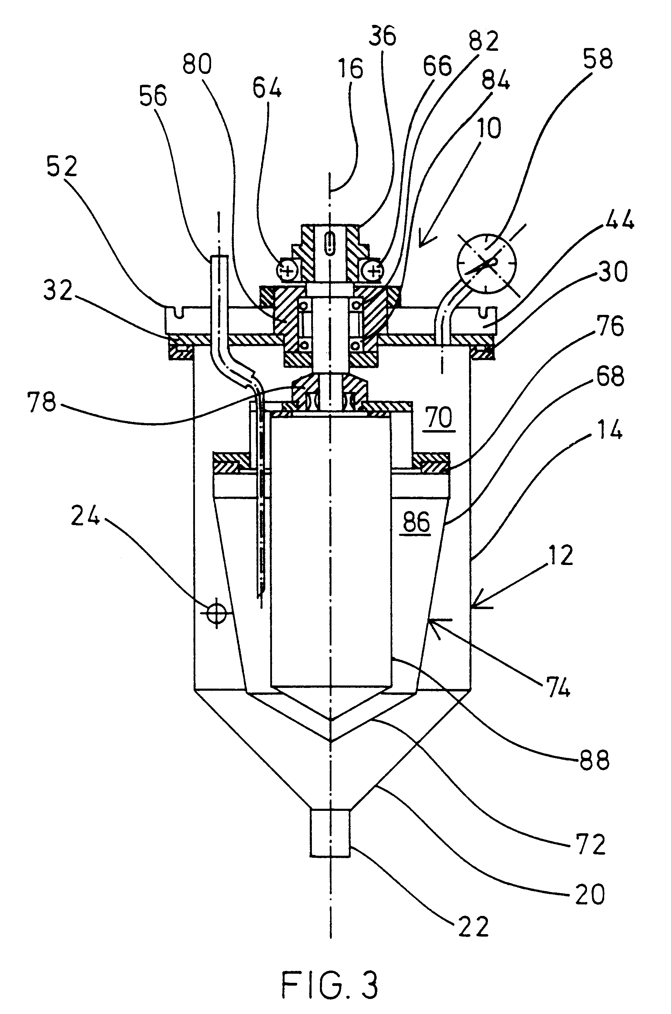

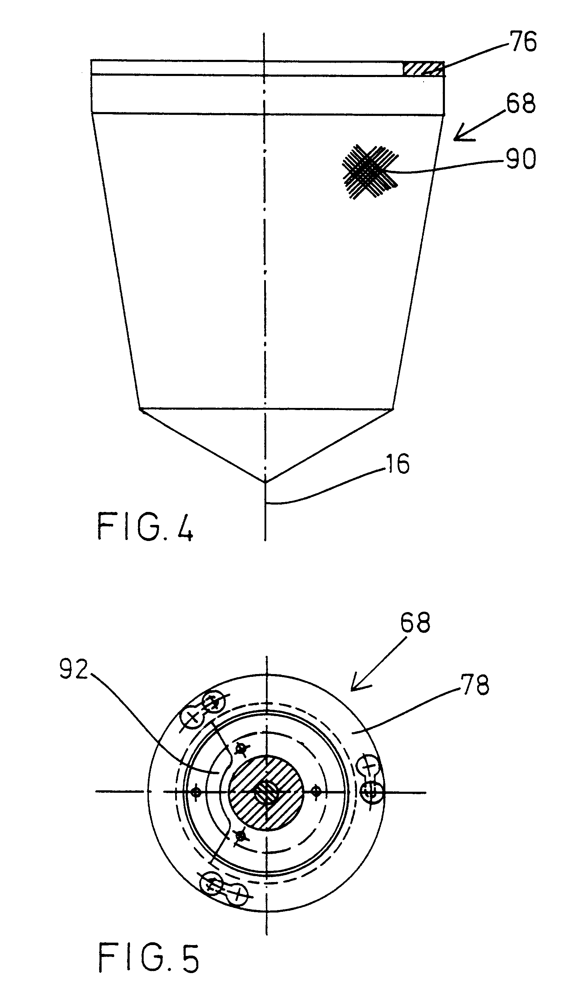

In Fig. 3, welche die Filtervorrichtung 10 im Längsschnitt entlang der Linie III-III in Fig. 1 bzw. Fig. 2 zeigt, ist die Anordnung eines Siebkörpers 68 im Innenraum 70 des Behälters 12 dargestellt. Der Siebkörper 68 ist etwa blumentopfförmig und mit einem kegelförmigen Bodenbereich 72 mit nach unten weisender Spitze mit einem Kegelwinkel von 120° ausgeführt. Der Siebkörper ist im Bereich seiner 238 mm hohen seitlichen Wandungen 74 konisch mit von 180 mm nach oben hin auf 255 mm zunehmendem Durchmesser ausgeführt. An seinem oberen Ende weist der Siebkörper 68 einen Ringflansch 76 mit einem Außendurchmesser von 255 mm, einem Innendurchmesser von 195 mm und einer Höhe von 10 mm auf, welcher mittels eines Befestigungselementes 78 mit der Welle 36 verbunden ist. Die Welle 36 ist in einem konzentrisch zur Mittelachse 16 im Zentrum des Deckels 32 angeordneten Stutzen 80 mit einem Innendurchmesser von 68 mm und einer Länge von 72 mm mittels zweier in axialer Richtung voneinander beabstandeter Kugellager 82, 84 schwenkbar gelagert. Im Bereich der Lagerung besitzt die Welle 36 einen Außendurchmesser von 40 mm. Im Innenraum 86 des Siebkörpers 68 ist ein zylinderförmiger mit Teflon beschichteter Verdrängungskörper 88 mit einem Durchmesser von 130 mm und einer Höhe von 296 mm angeordnet. Der Verdrängungskörper 88 dient im wesentlichen dazu, den Volumeninhalt der Filtervorrichtung zu reduzieren. Fig. 4 zeigt den Siebkörper 68 im Längsschnitt, schematisch ist ein Siebgewebe 90 dargestellt, welches quadratische Maschen von 0,2 mm Weite aufweist. Das Siebgewebe besteht aus Edelstahldrähten mit 0,125 mm Durchmesser. Die Drähte verlaufen unter einem Winkel von 45° zur Mittelachse 16.

Fig. 5 zeigt den Siebkörper 68 in der Draufsicht, insbesondere das Befestigungselement 78. Im Befestigungselement 78 ist ein kreisringsektorförmiger Ausschnitt 92 vorgesehen, welcher den Durchtritt des Filtratablaufs 56 ermöglicht.

## Patentansprüche

1. Filtervorrichtung (10), insbesondere für Dispersionsfarben, aufweisend einen im wesentlichen topfförmigen Behälter (12), dessen Mittelachse (16) vertikal angeordnet ist, einen in den freien Flüssigkeitsspiegel des Filtergutes hineinragenden Siebkörper (68) mit seitlich angeordneten Filterflächen, der im Innenraum des Behälters (12) um seine vertikal angeordnete Längsachse in einem Winkel von weniger als 360° reversierend schwenkbar ist, einen in den Raum zwischen Innenseite der Behälterwand (14) und Außenseite des Siebkörpers (68) mündenden Zulauf (24) für Filtergut und einen von oben her in den Innenraum des Siebkörpers (68) eingeführten Filtratablauf (56), der unterhalb des Flüssigkeitsspiegels des Filtrates mündet,
**dadurch gekennzeichnet**,
daß der Behälter (12) mit einem Deckel (32) druckdicht verschlossen ist, daß der Siebkörper (68) an einer im Zentrum des Deckels (32) schwenkbar gelagerten Welle (36) befestigt ist, daß zur Begrenzung der Schwenkbewegung an der Welle (36) ein Anschlagelement (60) und am Deckel (32) ein Gegenanschlagelement (62) vorgesehen ist, daß der Filtratablauf (56) fest mit dem Behälter (12) verbunden und parallel zur Längsachse des Behälters (12) in den Behälter (12) geführt ist, und daß der Behälter (12) in seinem unteren Bereich einen Ablaß (22) für Filterrückstände aufweist.

2. Filtervorrichtung nach Anspruch 1,
**dadurch gekennzeichnet**,
daß der Behälter (12) in seinem Bodenbereich (20) kegelförmig mit nach unten weisender Spitze ausgeführt ist.

3. Filtervorrichtung nach einem der Ansprüche 1 bis 2,
**dadurch gekennzeichnet**,
daß am Behälter (12) unterhalb der Oberkante des Siebkörpers (68) ein Füllstandsensor (26) vorgesehen ist.

4. Filtervorrichtung nach einem der Ansprüche 1 bis 3,
**dadurch gekennzeichnet**,
daß der Behälter (12) und/oder der Deckel (32) in Richtung der Mittelachse (16) verschiebbar sind, und daß der Deckel (32) am Behälter (12) mit Spannverschlußelementen (54) befestigbar ist.

5. Filtervorrichtung nach einem der Ansprüche 1 bis 4,
**dadurch gekennzeichnet**,
daß Siebkörper (68) in seinem Bodenbereichen (72) kegelförmig mit nach unten weisender Spitze ausgeführt ist und im Bereich seiner seitlichen Wandungen (74) die Form eines Konus mit nach oben hin zunehmendem Durchmesser aufweist.

6. Filtervorrichtung nach einem der Ansprüche 1 bis 5,
**dadurch gekennzeichnet**,
daß im Innenraum (86) des Siebkörpers (68) ein Verdrängungskörper (88) vorgesehen ist.

7. Filtervorrichtung nach einem der Ansprüche 1 bis 6,
**dadurch gekennzeichnet**,
daß Bodenbereich (72) und Wandungen (74) des Siebkörpers (68) ein grobmaschiges Stützgewebe und auf der Außenseite ein feinmaschiges Siebgewebe (90) aufweisen.

8. Filtervorrichtung nach Anspruch 7,
**dadurch gekennzeichnet**,
daß das Stützgewebe aus Edelstahl mit vorzugsweise quadratischen Maschen von 1,5 mm Weite und 1 mm Drahtdurchmesser und das Siebgewebe (90) aus Edelstahl mit vorzugsweise quadratischen Maschen von 0,2 mm Weite und 0,125 mm Drahtdurchmesser bestehen.

9. Filtervorrichtung nach einem der Ansprüche 1 bis 8,
**dadurch gekennzeichnet**,
daß der Siebkörper (68) um einen Winkel im Bereich von 45° bis 120°, vorzugsweise von 80°, schwenkbar ist.

## Claims

1. Filter device (10), especially for dispersion paints, showing a vessel (12), essentially of the form of a pot, the centre line (16) of which is arranged vertically, a sieving part (68) projecting into the free liquid level of the filter material with laterally arranged filter surfaces, which sieving part, in the interior of the vessel (12), may be reversibly swivelled about its vertically arranged longitudinal axis according to an angle inferior to 360°, a supplying part (24) leading to the space between the inside of the vessel wall (14) and the outside of the sieving part (68) for filter material and a filtrate discharge (56), introduced in the interior of the sieving part (68), coming from the top, which leads to the space under the level of the filtrate,
**characterized in that**
the vessel (12) is closed, pressure sealed, by a cover (32), in that the sieving part (68) is fastened to a shaft (36), which is swivellingly kept in the centre of the cover (32), in that, in order to limit the swivelling movement, a stop element (60) is provided on the shaft (36) as well as an opposed stop element (62) on the cover (32), in that the filtrate discharge (56) is solidly connected to the vessel (12) and conducted into the vessel (12), parallel to the longitudinal axis of the vessel (12), and in that the vessel (12) shows an outflow (22) for the filter residues in its lower part.

2. Filter device according to claim 1,
**characterized in that**
in its bottom part (20), the vessel (12) is conical with the point turned downwards.

3. Filter device according to one of the claims 1 to 2,
**characterized in that**
a level detector (26) is provided for on the vessel (12) under the upper edge of the sieving part (68).

4. Filter device according to one of the claims 1 to 3,
**characterized in that**
the vessel (12) and/or the cover (32) are movable in the centre line (16) direction and that the cover (32) and the vessel (12) may be fixed by means of clamping elements (54).

5. Filter device according to one of the claims 1 to 4,
**characterized in that**
the sieving part (68) is conical in its bottom parts (72) and carried out with the point turned downwards and that in the area of its lateral walls (74) it shows the shape of a cone with a diameter increasing towards the top.

6. Filter device according to one of the claims 1 to 5,
**characterized in that**
a recessing part (88) is provided for in the interior (86) of the sieving part (68).

7. Filter device according to one of the claims 1 to 6,
**characterized in that**
the bottom part (72) and the walls (74) of the sieving part (68) show an open-meshed sustainer texture and a fine-meshed sieving texture (90) on the outside.

8. Filter device according to claim 7,
**characterized in that**
the sustainer texture is of special steel, preferably with square meshes of 1.5 mm aperture width and a diameter of wire of 1 mm and the sieving texture (90) is of special steel with preferably square meshes of 0.2 mm aperture width and a diameter of wire of 0.125 mm.

9. Filter device according to one of the claims 1 to 8,
**characterized in that**
the sieving part (68) can be swivelled according to an angle of about 45° to 120°, preferably of 80°.

## Revendications

1. Dispositif filtrant (10), en particulier pour peintures en dispersion, présentant un récipient (12) essentiellement en forme de pot, dont l'axe médian (16) est disposé de façon verticale, un appareil de tamisage (68) avec surfaces à filtrer disposées latéralement, pénétrant dans la surface libre du produit à filtrer, lequel appareil peut être basculé de façon reversible autour de son axe longitudinal disposé verticalement suivant un angle inférieur à 360°, à l'intérieur du récipient (12), un tuyau d'alimentation (24) pour produit à filtrer aboutissant dans l'espace entre le côté intérieur de la paroi du récipient (14) et le côté extérieur de l'appareil de tamisage (68) et un tuyau d'écoulement (56) du produit à filtrer, introduit dans l'espace interne de l'appareil de tamisage (68) venant d'en haut et aboutissant au-dessous de la surface du produit à filtrer,
**caractérisé en ce que**
le récipient (12) est fermé par un couvercle (32) de façon résistante à la pression, en ce que l'appareil de tamisage (68) est fixé à un arbre (36) logé de façon orientable au centre du couvercle (32), en ce que, pour limiter le mouvement de bascule, un élément de butée (60) est prévu sur l'arbre (36) et un élément de contre butée (62) au couvercle (32), en ce que le tuyau d'écoulement (56) est relié fixement au récipient (12) et est conduit dans le récipient (12) parallèlement à l'axe longitudinal du récipient (12) et en ce que le récipient (12) présente dans sa partie inférieure une évacuation (22) pour les résidus de tamisage.

2. Dispositif filtrant selon la revendication 1,
**caractérisé en ce que**
le récipient (12) a un fond (20) de forme conique avec une pointe dirigée vers le bas.

3. Dispositif filtrant selon l'une des revendications 1 à 2,
**caractérisé en ce que**
un détecteur de niveau de remplissage (26) est prévu sur le récipient (12) au-dessous du bord supérieur de l'appareil de tamisage (68).

4. Dispositif filtrant selon l'une des revendications 1 à 3,
**caractérisé en ce que**
le récipient (12) et/ou le couvercle (32) sont déplaçables en direction de l'axe médian (16), et que le couvercle (32) est fixable au récipient (12) avec des éléments de fermeture à ressort (54).

5. Dispositif filtrant selon l'une des revendications 1 à 4,
**caractérisé en ce que**
l'appareil de tamisage (68) dans ses parties de base (72) est réalisé de forme conique avec une pointe dirigée vers le bas et qu'il a la forme d'un cône avec un diamètre augmentant vers le haut dans la partie de ses parois latérales (74).

6. Dispositif filtrant selon l'une des revendications 1 à 5,
**caractérisé en ce que**
dans l'espace interne (86) de l'appareil de tamisage (68), un élément de refoulement (88) est prévu.

7. Dispositif filtrant selon l'une des revendications 1 à 6,
**caractérisé en ce que**
le fond (72) et les parois (74) de l'appareil de tamisage (68) présente un tissu de soutien à grosses mailles et sur le côté extérieur un tissu de tamisage (90) à mailles fines.

8. Dispositif filtrant selon la revendication 7,
**caractérisé en ce que**
le tissu de soutien est en acier fin avec de préférence des mailles carrées de 1,5 mm d'ouverture et un calibre de fil de 1 mm et le tissu de tamisage (90) en acier fin avec de préférence des mailles carrées de 0,2 mm d'ouverture et un calibre de fil de 0,125 mm.

9. Dispositif filtrant selon les revendications 1 à 8,
**caractérisé en ce que**
l'élément de tamisage (68) peut être basculé suivant un angle de 45° à 120°, de préférence de 80°.
